# FASCICULE DE BREVET EUROPEEN

(11) **EP 3 300 980 B1**
(45) Date de publication et mention de la délivrance du brevet: **04.10.2023**
(21) Numéro de dépôt: 17193373.2
(22) Date de dépôt: 27.09.2017
(51) Int. Cl.: B60W 50/14, B60Q 3/54, B60Q 3/78, B60Q 3/18

(54) **DISPOSITIF D'ÉCLAIRAGE À EFFETS LUMINEUX DYNAMIQUES POUR UN HABITACLE DE VÉHICULE AUTOMOBILE**
BELEUCHTUNGSVORRICHTUNG MIT DYNAMISCHEN LICHTEFFEKTEN FÜR DEN INNENRAUM EINES KRAFTFAHRZEUGS
LIGHTING DEVICE WITH DYNAMIC LIGHT EFFECTS FOR A MOTOR VEHICLE PASSENGER COMPARTMENT

(30) Priorité: 28.09.2016 FR 1659208
(43) Date de publication de la demande: 04.04.2018
(73) Titulaire: Valeo Vision, 93012 Bobigny Cedex (FR)
(72) Inventeur: FLEURENCE, Thierry, 93012 BOBIGNY Cedex (FR)
(74) Mandataire: Valeo Visibility

(56) Documents cités:
- WO-A1-2015/151243
- US-A1- 2004 090 317
- US-A1- 2010 302 020

## Description

La présente invention concerne le domaine technique des véhicules automobiles, et plus précisément des dispositifs d'éclairage aptes à afficher des informations relatives à la vitesse du véhicule, à l'intérieur de son habitacle.

La conduite d'un véhicule automobile nécessite la connaissance en temps réel d'informations relatives à son fonctionnement comme par exemple sa vitesse. Cette information, nécessaire pour une conduite plus sûre, peut notamment être transmise au conducteur par l'intermédiaire d'un écran d'affichage situé au niveau du volant, et plus précisément, être intégré au tableau de bord, derrière le volant.

Cette configuration a pour inconvénient que l'écran d'affichage est difficilement visible par d'autres occupants du véhicule. Afin de remédier à ce problème, certains véhicules proposent l'intégration de l'écran d'affichage au centre du tableau de bord, c'est-à-dire, au niveau de l'axe longitudinal de l'habitacle. Cette solution a néanmoins pour inconvénient de décentrer l'écran d'affichage par rapport au champ de vision du conducteur, d'autant plus que l'information transmise aux usagers est ponctuelle, de type valeur chiffrée évoluant en fonction de la vitesse. De ce fait, le conducteur doit détourner son regard de la route pour prendre connaissance de la vitesse du véhicule. US 2010/0302020 A et EP-A-3 128 498 divulguent des dispositifs d'éclairage pour un habitacle de véhicule.

Les constructeurs sont à la recherche d'une position optimale d'un indicateur de vitesse qui puisse servir à l'ensemble des passagers du véhicule et qui n'impose pas une distraction au conducteur quand il conduit.

Par ailleurs, les véhicules automobiles évoluent et notamment vers des véhicules à conduite autonome dans lesquels la gestion des commandes de pilotage peut être assurée de manière automatique par le véhicule, que ce soit ponctuellement pour des opérations de stationnement, de conduites à faibles vitesses, ou que ce soit sur des périodes plus longues où le véhicule gère des phases d'accélération, de freinage et d'évitement des véhicules tiers présents sur la scène de route. Dans chacune de ces phases de pilotage automatique, l'attention du conducteur peut ne pas être portée sur la scène de route et/ou les commandes de pilotage. En particulier, le conducteur d'un tel véhicule autonome configuré dans le mode de conduite autonome peut être en train de lire un livre, de discuter avec le passager du siège avant, voire même retourné en direction des sièges arrières. Dans de tels cas, le conducteur n'a plus nécessairement la sensation visuelle d'être dans un véhicule roulant, malgré les éventuelles vibrations de l'habitacle liées au roulage du véhicule et/ou au niveau sonore dudit véhicule en déplacement.

En d'autres termes, dans le cas d'un véhicule autonome configuré dans un mode de conduite autonome, le conducteur du véhicule qui n'est plus actif dans son rôle de conducteur du véhicule peut perdre en partie ou totalement la sensation de vitesse liée au déplacement dudit véhicule.

En outre, cette perte de sensation peut conduire le conducteur à ressentir un mal des transports proche de celui ressenti par les passagers d'un véhicule en déplacement.

Un but de l'invention est donc de redonner une sensation de vitesse aux occupants d'un véhicule, afin de réduire leur sensibilité au mal des transports.

Afin de résoudre notamment les problématiques mentionnées ci-dessus, la présente demande propose un dispositif d'éclairage à effets lumineux dynamiques pour habitacle de véhicule automobile selon la revendication 1, l'habitacle pouvant notamment comprendre un poste de pilotage et une planche de bord situés dans une partie avant de l'habitacle, une partie arrière et au moins un système d'éclairage.

Le dispositif d'éclairage comprend un système d'éclairage configuré pour émettre au moins un signal lumineux produisant un ou plusieurs effets dynamiques de défilement dans l'habitacle, suivant l'axe longitudinal du véhicule et dans le sens inverse du déplacement du véhicule. Par les termes « axe longitudinal », on entend un axe passant par l'avant et l'arrière de l'habitacle, au niveau de leur centres.

Plus précisément, le dispositif d'éclairage est configuré pour qu'au moins un signal lumineux émis par le système d'éclairage défile de l'avant vers l'arrière de l'habitacle, lorsque le véhicule se déplace vers l'avant. A l'inverse, au moins un signal lumineux peut défiler de l'arrière vers l'avant, lorsque le véhicule se déplace en arrière. En d'autres termes, le dispositif d'éclairage est configuré pour informer, de façon visuelle, un occupant de l'habitacle sur le déplacement du véhicule. De préférence, les effets lumineux produits par le dispositif d'éclairage sont de type dynamique afin de reproduire un effet de vitesse corrélé au déplacement du véhicule ou simuler le défilement de la route. Ainsi, de façon avantageuse, un occupant ne regardant pas la route perçoit visuellement le mouvement du véhicule pour limiter un phénomène de désynchronisation entre les informations visuelles et les informations transmises par son oreille interne. De ce fait, l'invention permet de limiter fortement le phénomène du mal des transports, ou cinétose, en produisant un effet visuel dynamique dans l'habitacle, cohérent avec la sensation de déplacement perçue par l'oreille interne d'un occupant de l'habitacle.

Selon une autre caractéristique de l'invention, le système d'éclairage est configuré pour qu'au moins un signal lumineux défile dans une partie arrière de l'habitacle. Selon cette alternative, le signal lumineux est visible par un occupant présent à l'arrière de l'habitacle. Selon un autre mode de réalisation, le signal lumineux est uniquement visible dans la partie arrière de l'habitacle afin de ne pas gêner le conducteur du véhicule.

Selon une autre caractéristique de l'invention, le système d'éclairage est configuré pour qu'au moins un signal lumineux défile dans une partie avant de l'habitacle. Cette alternative est avantageuse lorsque le véhicule se déplace de façon autonome, c'est-à-dire, sans l'aide d'un conducteur. Ainsi, le conducteur peut détourner son attention de la route, tout en ayant en temps réel une information sur le déplacement du véhicule. L'invention permet au conducteur de contrôler de façon indirecte la vitesse du véhicule et limite également le phénomène du mal des transports pour les occupants de la partie avant de l'habitacle.

Selon une autre caractéristique de l'invention, le système d'éclairage est configuré pour qu'au moins un signal lumineux défile dans la partie avant, puis dans la partie arrière de l'habitacle. Selon une alternative, le système d'éclairage est configuré pour faire défiler un premier signal lumineux dans la partie avant de l'habitacle et un second signal lumineux dans la partie arrière de l'habitacle. Les défilements des signaux lumineux peuvent être synchronisés par le système d'éclairage de sorte que les occupants présents à l'avant et l'arrière de l'habitacle perçoivent la même sensation de vitesse simulée par lesdits signaux. A l'inverse, le système d'éclairage peut aussi être configuré pour contrôler de façon indépendante la vitesse de défilement du premier et du second signal lumineux. Ainsi, en fonction de la sensibilité des occupants de l'habitacle au phénomène de cinétose, le système d'éclairage peut adapter la vitesse de défilement des signaux lumineux à l'avant et à l'arrière de l'habitacle. En d'autres termes, la vitesse de défilement d'un signal lumineux peut être accélérée afin d'amplifier la sensation de vitesse et/ou d'accélération ressentie par un occupant du véhicule ou bien ralentie lorsque l'occupant devient moins sensible au mal des transports.

Selon une autre caractéristique de l'invention, le dispositif d'éclairage comprend un module de contrôle configuré pour recevoir une information provenant d'un module de conduite autonome du véhicule, de telle sorte qu'en fonction de cette information le module de contrôle configure, et notamment active ou désactive, le système d'éclairage. En d'autres termes, le dispositif d'éclairage est apte à être piloté par un module de conduite autonome.

Selon une autre caractéristique de l'invention, le module de contrôle est configuré pour recevoir une information, en provenance de moyens de détection, relative à la présence d'un occupant dans l'habitacle et pour traiter cette information pour piloter le système d'éclairage. Plus précisément, les moyens de détection sont configurés pour identifier la présence d'un ou de plusieurs occupants à l'avant et/ou à l'arrière de l'habitacle. Plus particulièrement, le dispositif de détection est configuré pour repérer la présence d'un occupant ou d'un conducteur à un poste de pilotage de l'habitacle. Ainsi, le système d'éclairage est apte à activer le système d'éclairage lorsqu'un occupant prend place dans l'habitacle. A l'inverse, le système d'éclairage est apte à interrompre l'un des signaux lumineux défilant à l'avant ou à l'arrière de l'habitacle, indépendamment de l'autre, lorsque par exemple un occupant quitte la partie arrière de l'habitacle ou qu'il devient moins sensible au phénomène du mal des transports. Les moyens de détection permettent ainsi d'activer automatiquement le système d'éclairage dans la ou les parties de l'habitacle occupées, afin d'économiser les ressources électriques du véhicule.

Selon une autre caractéristique de l'invention, le système d'éclairage est configuré pour qu'au moins un signal lumineux défile à une vitesse proportionnelle à la vitesse de déplacement du véhicule. Cette alternative permet avantageusement de réduire le phénomène de cinétose dû à une désynchronisation entre les informations visuelles et les informations perçues par l'oreille interne, lors du déplacement du véhicule. De plus, cette alternative permet de donner une information aux occupants de l'habitacle sur les changements d'allure du véhicule. Notamment, le système d'éclairage peut être configuré pour qu'au moins un signal lumineux défile à la vitesse de déplacement du véhicule. En variante, le système d'éclairage est configuré pour qu'au moins un signal lumineux défile à une vitesse proportionnelle à l'accélération du véhicule. Selon une autre variante, le système d'éclairage est configuré pour qu'au moins un signal lumineux défile à une vitesse supérieure à la vitesse de déplacement du véhicule. Cette alternative est particulièrement avantageuse pour avertir un occupant de l'habitacle, d'une vitesse excessive et/ou une situation à risque pour le véhicule. A titre d'exemple, la vitesse de défilement peut augmenter soudainement lors du dépassement de la vitesse autorisée et/ou en cas de détection d'un embouteillage ou pour signaler un accident sur la route. Selon un autre exemple, la couleur d'un signal lumineux peut varier lorsque le véhicule s'approche ou dépasse la vitesse autorisée. La couleur du signal lumineux peut ainsi être verte lorsque le véhicule se déplace en dessous de la vitesse limite, puis orange lorsqu'il s'approche de cette limite, puis rouge lorsqu'il dépasse ladite limite.

Selon différentes caractéristiques de l'invention, on peut prévoir que :
- le système d'éclairage est configuré pour émettre simultanément au moins deux signaux lumineux distincts dans l'habitacle ;
- le système d'éclairage est configuré pour émettre au moins deux signaux lumineux divergents en direction de l'arrière de l'habitacle ;
- le système d'éclairage est configuré pour émettre un signal lumineux défilant de chaque côté de l'habitacle, en se déplaçant de l'avant vers l'arrière.

Les signaux lumineux peuvent se déplacer au niveau du pavillon et/ou des portières de l'habitacle. Les signaux lumineux peuvent se déplacer latéralement de chaque côté du véhicule, et par exemple en étant synchronisés afin de simuler plus fidèlement le défilement du paysage de chaque côté du véhicule.

Selon d'autres caractéristiques de l'invention, le système d'éclairage est configuré pour émettre un signal lumineux éclairant au moins partiellement une partie du plancher de l'habitacle, et/ou bien éclairant au moins partiellement une partie du pavillon de l'habitacle.

Selon une autre caractéristique de l'invention, le système d'éclairage est configuré pour émettre un signal lumineux éclairant au moins partiellement une partie d'une paroi latérale de l'habitacle, comme par exemple un panneau d'une portière.

Selon une autre caractéristique de l'invention, le système d'éclairage comprend au moins un bandeau lumineux comportant plusieurs sources de lumière s'allumant l'une après l'autre, de manière à faire défiler au moins un signal lumineux. Selon un mode de réalisation particulier de l'invention, il peut être associé au système d'éclairage un ou plusieurs guides optiques pour optimiser la diffusion ou la dispersion de la lumière dans l'habitacle.

Selon une autre caractéristique de l'invention, le système d'éclairage comprend des sources de lumière de type diodes électroluminescentes. Le système d'éclairage peut comprendre alternativement, ou en combinaison, un dispositif de vidéo projection.

Selon une autre caractéristique de l'invention, le dispositif d'éclairage comprend une interface permettant à un utilisateur de contrôler la forme et/ou le motif et/ou les dimensions et/ou la couleur et/ou l'intensité et/ou la vitesse de défilement d'au moins un signal lumineux émis par le système d'éclairage. L'interface peut être configurée pour permettre à un utilisateur de sélectionner une ou plusieurs parties de l'habitacle éclairées par le système d'éclairage.

L'invention porte également sur un véhicule automobile comprenant un dispositif d'éclairage tel que décrit ci-dessus. Selon une variante, le véhicule automobile comprend un module de conduite autonome.

L'invention concerne aussi un procédé d'éclairage d'un véhicule automobile comprenant un habitacle, un module de contrôle et un dispositif d'éclairage tels que décrits ci-dessus. Le module de contrôle est configuré pour mettre en oeuvre les étapes suivantes :
- identification du mode de conduite du véhicule ;
- détermination de la vitesse de déplacement du véhicule ;
- choix des paramètres de fonctionnement du système d'éclairage en fonction de la vitesse de déplacement du véhicule ;
- activation du système d'éclairage en fonction desdits paramètres.

Selon l'invention, le choix des paramètres de fonctionnement comprend l'identification d'une ou plusieurs zones de l'habitacle à éclairer par le système d'éclairage. Plus précisément, la ou les zones de l'habitacle à éclairer par le système d'éclairage dépendent du mode de conduite du véhicule identifié préalablement par le module de contrôle. Par exemple, le module de contrôle définit la partie arrière de l'habitacle comme zone susceptible d'être éclairée par le système d'éclairage, lorsque le module de contrôle identifie préalablement un mode de conduite autonome du véhicule. Selon un autre exemple, le module de contrôle définit la partie arrière et/ou la partie avant de l'habitacle comme zone(s) susceptible(s) d'être éclairée(s) par le système d'éclairage, lorsque le module de contrôle identifie un mode de conduite manuel du véhicule.

Selon l'invention, le choix des paramètres de fonctionnement comprend comme paramètre la vitesse et/ou l'accélération du défilement du signal lumineux dans l'habitacle du véhicule.

Les caractéristiques de l'invention mentionnées ci-dessus ainsi que d'autres, apparaîtrons plus clairement à la lecture de la description ci-dessous qui se réfère aux dessins annexés suivants :
- la figure 1 est une vue schématique d'un dispositif d'éclairage pour véhicule automobile autonome selon l'invention ;
- la figure 2 est une vue schématique d'une variante de réalisation d'un dispositif d'éclairage représenté à la figure 1 ;
- la figure 3 est une vue schématique d'une autre variante de réalisation d'un dispositif d'éclairage représenté à la figure 1 ;
- la figure 4 est une vue schématique d'un véhicule automobile autonome comprenant un dispositif d'éclairage tel que précédemment illustré ;
- les figures 5 et 6 représentent des vues schématiques d'une portière d'un véhicule automobile autonome selon la figure 4 ;
- les figures 7 à 9 représentent une vue en perspective de l'habitacle d'un véhicule automobile autonome selon la figure 4 ;
- la figure 10 est une vue schématique d'une variante d'un véhicule automobile autonome comprenant un dispositif d'éclairage agencé dans cet exemple sur le pavillon ou sur le plancher du véhicule ; et
- la figure 11 est une vue schématique d'une autre variante de véhicule automobile autonome comprenant un dispositif d'alerte lumineux selon l'invention.

Pour rappel, la présente invention vise à proposer un dispositif d'éclairage à effets lumineux dynamiques pour l'habitacle d'un véhicule automobile, configuré pour informer de façon visuelle un occupant de l'habitacle sur le déplacement du véhicule afin notamment, de limiter le phénomène du mal des transports.

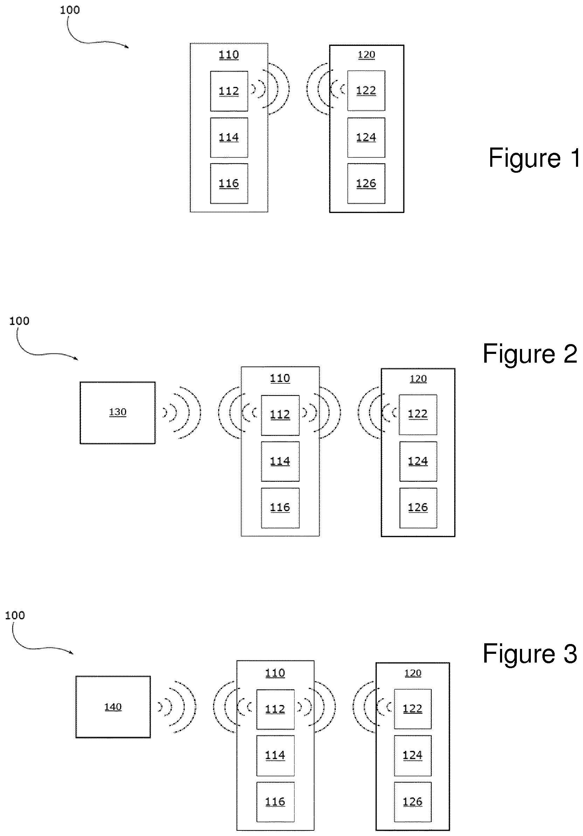

Pour cela, l'invention propose un dispositif d'éclairage 100 à effets lumineux dynamiques. Un exemple de réalisation du dispositif d'éclairage est illustré à la figure 1. Selon cet exemple, le dispositif d'éclairage 100 comprend un module de contrôle 110 et un système d'éclairage 120 contrôlé par ledit module. Le module de contrôle 110 comporte une unité de communication 112 connectée au système d'éclairage 120 et apte à se connecter à un autre dispositif pour recevoir des commandes de la part dudit dispositif. Un autre dispositif peut par exemple être un ordinateur de bord d'un véhicule automobile et/ou un dispositif de navigation et/ou un dispositif de communication de type téléphone portable. Par le terme « connecté », on entend la possibilité pour deux entités d'échanger des informations. Les entités peuvent être connectées par une liaison physique, comme par exemple un ou plusieurs fils conducteurs ou, de préférence, par une liaison sans fil du type « WIFI » ou « Bluetooth ». L'unité de communication 112 est connectée à un calculateur 114 de type unité centrale, permettant de convertir ces commandes en instructions de fonctionnement pour le système d'éclairage 120. Plus précisément, le calculateur 114 est connecté à une unité de mémorisation 116 et configuré pour associer à chaque commande des paramètres de fonctionnement du système d'éclairage, préenregistrés et stockés dans l'unité de mémorisation 116. Les paramètres de fonctionnement sont ensuite transmis au système d'éclairage 120 par l'intermédiaire de l'unité de communication 112.

Le système d'éclairage 120 intègre une unité de communication 122 pour transmettre ces paramètres de fonctionnement à un calculateur 124, configuré pour convertir ces paramètres en caractéristiques de fonctionnement pour un ou plusieurs ensembles lumineux 126. Le calculateur 124 est configuré pour activer et désactiver chaque ensemble lumineux sur commande, tout en contrôlant leurs caractéristiques de fonctionnement, c'est-à-dire, la couleur, l'intensité, la fréquence et la durée d'émission de la lumière émise par un ensemble lumineux.

Un ensemble lumineux 126, notamment dans les exemples illustrés sur les figures 1 à 10, peut comprendre plusieurs sources de lumière, alignées en une série longitudinale, de sorte à former une bande le long de laquelle l'activation successive desdites sources de lumière permet le défilement d'un ou plusieurs signaux lumineux. Une source de lumière peut comprendre une ou plusieurs diodes électroluminescentes (LED) 127, et notamment une ou plusieurs LEDs de couleurs, éventuellement différentes, ou LEDs blanches ou de type RGB (pour l'acronyme Red-Green-Blue), le fonctionnement de chaque diode électroluminescente étant contrôlé par le module de contrôle 110.

Selon une alternative, un ensemble lumineux 126 peut comprendre un dispositif de vidéoprojection 129 configuré pour projeter un faisceau lumineux sur un élément de l'habitacle ou une surface vitrée. De préférence, les dimensions du dispositif de vidéoprojection sont adaptées pour permettre son intégration dans un élément de l'habitacle, comme par exemple une planche de bord ou un plafonnier. Selon un mode de réalisation alternatif non représenté, il peut être associé au dispositif de vidéoprojection 129 un ou plusieurs miroirs permettant d'orienter son faisceau lumineux sur des zones spécifiques de l'habitacle d'un véhicule. Eventuellement, un ou plusieurs miroirs peuvent être montés mobile, et notamment en rotation, pour modifier leur orientation par le module de contrôle 110 afin que le faisceau lumineux puisse effectuer un balayage lumineux de l'habitacle selon une direction parallèle ou sensiblement parallèle au déplacement du véhicule.

Selon une variante de réalisation représentée à la figure 2, le dispositif d'éclairage 100 décrit ci-dessus peut comprendre une interface 130 connectée à l'unité de communication 112 afin de permettre à un utilisateur de modifier et/ou d'enregistrer de nouveaux paramètres de fonctionnement au niveau de l'unité de mémorisation 116. Ainsi, l'utilisateur peut personnaliser un ou plusieurs signaux lumineux émis par le système d'éclairage 120, en fonction de ses préférences et/ou de la configuration de l'habitacle de son véhicule automobile.

Selon une autre variante de réalisation représentée à la figure 3, le dispositif d'éclairage 100 peut également comprendre des moyens de détection 140 de la présence d'un ou plusieurs occupants dans un véhicule automobile, de sorte à permettre au dispositif d'éclairage 100 d'activer un ou plusieurs ensembles lumineux susceptibles d'être vues par au moins un occupant du véhicule. Les moyens de détection 140 peuvent notamment être configurés pour transmettre la position des occupants dans le véhicule de sorte à permettre au dispositif d'éclairage 100 d'activer la ou les sources de lumière les plus susceptibles d'être vues par l'un et/ou l'autre des occupants pour lui permettre de contrôler la vitesse du véhicule lorsque le véhicule est piloté par un module de conduite autonome et/ou lui permettre de lutter contre un possible mal des transports.

Bien entendu, un dispositif d'éclairage 100 selon l'invention peut inclure une ou plusieurs variantes telles que décrites ci-dessus, en fonction de l'habitacle du véhicule automobile destiné à être équipé du dispositif d'éclairage et/ou des préférences de son utilisateur.

L'invention peut être destinée à équiper un véhicule automobile autonome 200 comprenant un habitacle 210 dans lequel sont présents un siège conducteur 212 et plusieurs sièges passagers 214. Les sièges situés à l'avant de l'habitacle font face à une planche de bord 216 incluant un poste de pilotage 218 positionné en vis-à-vis du siège conducteur 212. Le poste de pilotage 218 comprend des commandes 220 de pilotage incluant un volant 222 permettant au conducteur de diriger le déplacement du véhicule, un ordinateur de bord 224 centralisant les informations liées au fonctionnement du véhicule et un module de conduite autonome 226 configuré pour déplacer le véhicule sans l'intervention du conducteur. L'ordinateur de bord 224 comprend une interface 228 permettant au conducteur de consulter et de modifier certaines caractéristiques du véhicule et d'activer ou de désactiver le module de conduite autonome 226. Le module de contrôle 110 est placé dans le véhicule et connecté au module de conduite autonome 226 et à l'ordinateur de bord 224, par l'intermédiaire de son unité de communication 112, de sorte à recevoir des commandes émises par le module de conduite autonome et/ou l'ordinateur de bord. Le système d'éclairage 120 est agencé dans l'habitacle 210 pour être visible par le conducteur du véhicule et/ou un passager.

Le système d'éclairage 120 peut être agencé de différentes façons dans l'habitacle 210, en fonction de sa configuration, de sa taille et/ou des préférences de l'utilisateur du véhicule 200. Plusieurs exemples d'agencement du système d'éclairage 120 dans un habitacle 210 sont présentés ci-dessus. Ces exemples ne sont pas limitatifs de l'invention et peuvent être combinés afin d'obtenir d'autres types d'agencement.

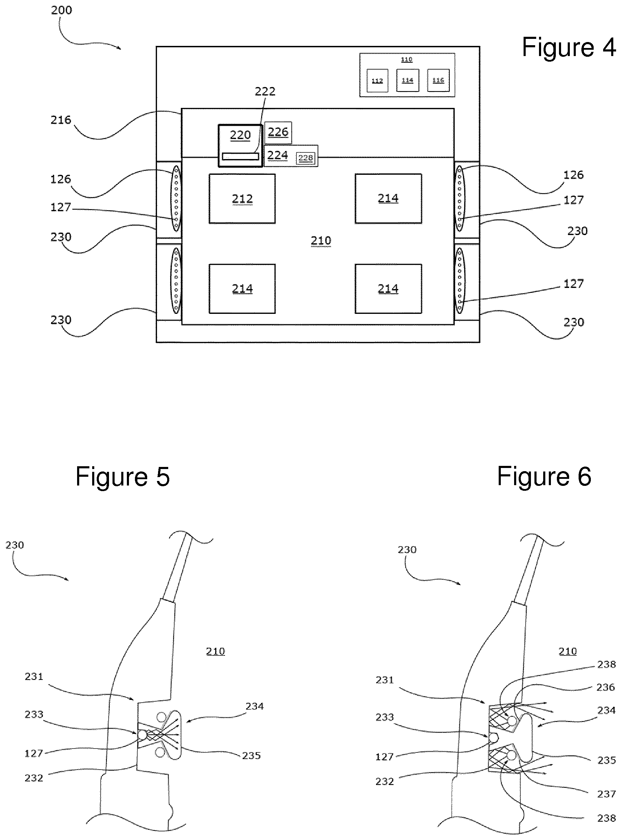

Selon un premier exemple d'agencement illustré à la figure 4, un ensemble lumineux 126 tel que décrit ci-dessus est fixé sur ou dans la garniture de chaque portière 230 de l'habitacle 210. Chaque ensemble lumineux 126 est orienté pour que les diodes électroluminescentes 127 qui le composent soient alignées ou sensiblement alignées selon l'axe longitudinal de l'habitacle 210. Selon une variante de réalisation, les ensembles lumineux 126 peuvent être agencés dans l'habitacle de manière à donner l'illusion d'un bandeau lumineux continu sur chaque côté de l'habitacle, lorsque les portières 230 sont fermées. Les diodes électroluminescentes sont contrôlées par le module de contrôle 110 de manière à être éclairée successivement, l'une après l'autre, afin de produire un effet lumineux dynamique, longitudinalement, dans le sens opposé au déplacement du véhicule.

Selon un mode de réalisation particulier illustré aux figures 5 et 6, chaque portière 230 comporte un logement 231 creusé dans l'épaisseur du panneau de porte et s'étendant de l'avant vers l'arrière de l'habitacle. Le logement comporte au niveau de son fond 232 un premier groupe 233 de diodes électroluminescentes 127 tel que décrit ci-dessus. Le premier groupe de diodes est recouvert par un dispositif optique 234 servant de guide optique, pour que la lumière émise par les diodes électroluminescentes 127 éclaire directement l'habitacle au niveau d'une face avant 235 du dispositif optique, comme illustré à la figure 5. Le dispositif optique 234 comporte une base qui s'étend depuis le fond 232 du logement 231 et une tête qui prolonge cette base vers l'habitacle et qui présente ladite face avant 235. Cette tête du dispositif optique présente en outre, au niveau de sa face arrière 236, en vis-à-vis du fond 232, une couche optiquement opaque 237 à la lumière émise par les diodes électroluminescentes 127. Sur cette couche est fixé un deuxième groupe 238 de diodes électroluminescentes 127, de manière à ce que la lumière qu'elles émettent, se réfléchisse sur les parois du logement 231 avant d'éclairer l'habitacle 210, comme illustré à la figure 6. Ainsi, un occupant de l'habitacle peut percevoir un signal lumineux indirect, d'intensité moindre et plus diffus, lorsque le deuxième groupe 238 émet de la lumière par rapport au premier groupe 233. En fonction de la sensibilité et/ou des préférences des occupants, le module de contrôle 110 peut être configuré pour activer le premier groupe 233 ou le deuxième groupe 238 de diodes électroluminescentes.

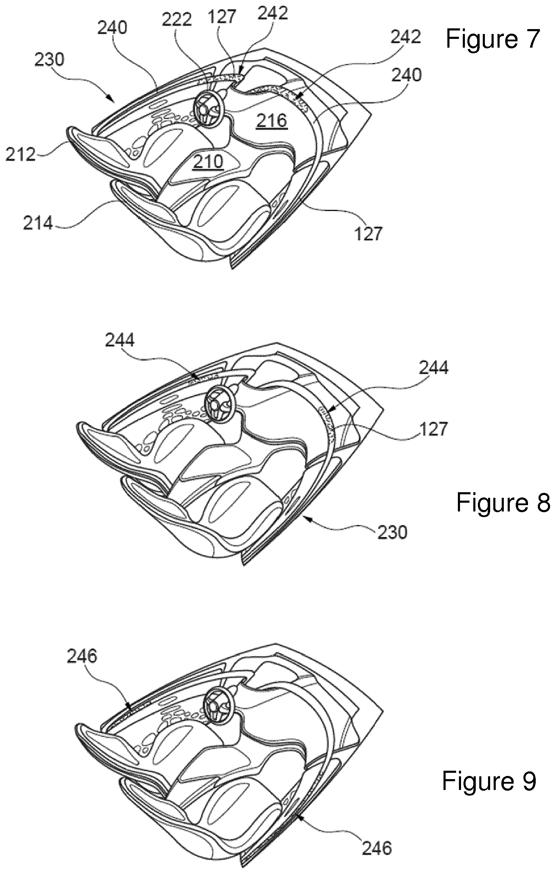

Selon un deuxième exemple d'agencement illustré aux figures 7 à 9, l'habitacle 210 peut comprendre deux bandeaux lumineux 240, s'étendant respectivement de chaque côté du véhicule, et formant de la sorte un support à deux signaux divergents depuis le poste de conduite en direction de l'arrière du véhicule. Ces bandeaux lumineux comporte une partie initiale qui s'étend sur la planche de bord depuis le volant 222 et une partie finale qui s'étend vers l'arrière de l'habitacle le long des portières gauches, respectivement droites 230. On comprend que dans un tel agencement, la partie initiale, qui s'étend sensiblement transversalement à la direction d'avancement du véhicule, présente essentiellement un caractère esthétique, pour donner l'impression aux usagers que le signal lumineux part du volant, tandis que c'est la partie finale qui permet de donner aux occupant une information relative au déplacement et à la vitesse du véhicule qui soit particulièrement efficace pour traiter du mal des transports notamment.

Chaque bandeau lumineux comporte des diodes électroluminescentes 127 et les diodes correspondantes à la partie finale du bandeau sont sensiblement alignées longitudinalement, de l'avant vers l'arrière du véhicule. Les diodes électroluminescentes sont contrôlées par le module de contrôle 110 de manière à être éclairée successivement, l'une après l'autre, afin de produire un effet lumineux dynamique, transversalement au sens de déplacement du véhicule pour la partie initiale du bandeau lumineux, et longitudinalement, dans le sens opposé au déplacement du véhicule, pour la partie finale du bandeau. En d'autres termes, le module de contrôle 110 active au fur et à mesure les diodes électroluminescentes d'un ensemble lumineux de manière à générer un faisceau lumineux se déplaçant de l'arrière vers l'avant de l'habitacle du véhicule lorsque le véhicule se déplace en marche arrière, ou de manière à générer un faisceau lumineux se déplaçant de l'avant vers l'arrière de l'habitacle du véhicule lorsque le véhicule se déplace en marche avant.

Plus particulièrement, on a illustré sur les figures 7 à 9 une séquence d'allumage des diodes correspondant à une marche avant du véhicule. Au début de la séquence, le module de contrôle 110 sélectionne un premier ensemble lumineux 242, ici se situant au plus proche du volant et/ou de l'avant de l'habitacle comme illustré à la figure 7, et l'active. Il est envisageable à ce stade d'avoir un allumage simultané des diodes composants ce premier ensemble ou bien un allumage successif des diodes vers l'extérieur du véhicule, c'est-à-dire depuis le volant vers la porte. Au bout d'un temps défini et préenregistré dans le module de contrôle, ce temps pouvant être fonction de la vitesse du véhicule, le module de contrôle désactive le premier ensemble lumineux avant d'activer un deuxième ensemble lumineux 244 situé latéralement au niveau des portières avant, comme illustré à la figure 8. Là encore, le module de contrôle peut être configuré pour prévoir un allumage simultané des diodes composants ce deuxième ensemble ou bien un allumage successif des diodes de ce deuxième ensemble vers l'arrière du véhicule. Le deuxième ensemble lumineux est à son tour désactivé avant d'activer un troisième ensemble lumineux 246 situé longitudinalement au niveau du conducteur, comme illustré à la figure 9. L'activation successive des différents ensembles lumineux donne ainsi l'illusion pour un occupant du véhicule, d'un signal lumineux dynamique se déplaçant de l'avant vers l'arrière de l'habitacle, dans un sens opposé au sens de déplacement en marche avant du véhicule. Le passage d'un ensemble lumineux à l'autre, tel qu'il vient d'être décrit, peut être séquentiel, c'est-à-dire que l'allumage de l'un a lieu après l'extinction du précédent, ou bien peut être continu, c'est-à-dire que l'allumage de l'un a lieu simultanément à l'extinction du précédent.

Le module de contrôle peut être ainsi configuré pour que l'allumage des diodes soit successif avec une extinction de la source « n » de la série de l'ensemble lumineux, ou des sources « n », après l'allumage de la source « n+1 », ou des sources « n+1 », de sorte que le bandeau lumineux garde une dimension constante, en se déplaçant de l'arrière vers l'avant d'un véhicule se déplaçant en marche arrière ou de l'avant vers l'arrière d'un véhicule se déplaçant en marche avant. En variante, le module de contrôle peut être configuré pour laisser allumées les sources au fur et à mesure de l'allumage des sources suivantes, de sorte que le bandeau lumineux s'agrandit en direction du volant, en donnant là encore un déplacement vers l'avant du véhicule.

D'autres ensembles lumineux peuvent être mis en oeuvre pour s'éclairer dans la partie arrière de l'habitacle, et on saura décrire ci-après les possibilités offertes par un agencement des ensembles lumineux dans la partie avant et dans la partie arrière de l'habitacle.

Les sources lumineuses allumées successivement ou simultanément d'un même ensemble lumineux peuvent être la totalité des sources lumineuses du même ensemble, ou bien seulement une partie des diodes de celui-ci. Notamment lorsque le dispositif lumineux 100 comprend des moyens de détection 140 de la présence d'un conducteur dans l'habitacle 200, tel que décrit ci-dessus, le module de contrôle 110 peut définir un nombre limité de diodes à allumer pour former le bandeau du signal d'alarme lumineux. La première diode ou le premier ensemble de diodes électroluminescentes à allumer est déterminé en fonction de la position du conducteur ou en fonction de la zone que regarde le conducteur au moment de la détection, la dernière diode, ou le dernier ensemble de diodes, à allumer étant déterminée par l'étude du champ de vision du conducteur, afin de s'assurer que celle-ci soit visible par le conducteur. En d'autres termes, on définit une première source de la série à allumer, et une dernière source de la série à allumer : la dernière source est située plus en arrière du véhicule que la première source lorsque le véhicule circule en marche avant.

Tel que cela sera décrit ci-après, on pourra également prendre en considération le nombre de passagers ou le mode de conduite détecté (autonome ou manuelle) pour définir l'étendue du bandeau lumineux.

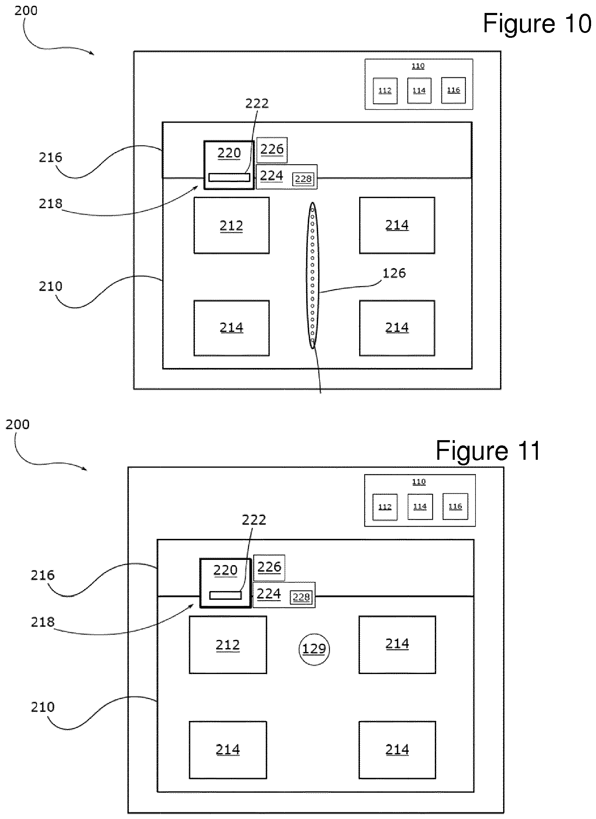

Selon un troisième exemple d'agencement illustré à la figure 10, les moyens lumineux 120 comportent un ensemble lumineux 126 tel que décrit ci-dessus, agencé sur l'axe médian du véhicule, c'est-à-dire entre les deux sièges avant du véhicule. Cet ensemble lumineux central peut aussi être agencé sur ou dans la garniture du plancher et/ou sur ou dans le pavillon de l'habitacle. L'ensemble lumineux 126 est orienté de sorte que les diodes électroluminescentes 127 qui le composent soient alignées ou sensiblement alignées selon l'axe longitudinal de l'habitacle 210.

Selon un quatrième exemple d'agencement illustré à la figure 11, le système d'éclairage 120 comprend un dispositif de vidéoprojection 129 tel que décrit ci-dessus, agencé au niveau du pavillon de l'habitacle de manière à pouvoir projeter un signal lumineux sur une surface l'habitacle. De préférence, le dispositif de vidéoprojection est agencé pour éclairer les garnitures des portières et/ou le plancher et/ou le pavillon de l'habitacle 210. Le faisceau lumineux du dispositif de vidéoprojection 129 peut être orienté de manière à pouvoir éclairer une zone de l'habitacle avec une image dynamique. Par les termes « image dynamique », on entend une image reflétant le défilement d'un signal lumineux sur ladite zone.

Selon un mode de réalisation alternatif non représenté, il peut être associé à l'ensemble lumineux 126 un ou plusieurs miroirs permettant d'orienter la lumière émise par une ou plusieurs diodes électroluminescentes 127 sur des zones spécifiques de l'habitacle. Eventuellement, un ou plusieurs miroirs peuvent être montés sur une plateforme mobile, dont l'orientation peut être modifiée par le module de contrôle 110 afin de pouvoir effectuer un balayage lumineux de l'habitacle selon une direction parallèle ou sensiblement parallèle au déplacement du véhicule 200.

La présente invention porte également sur un procédé d'utilisation d'un dispositif d'éclairage 100 agencé dans un véhicule automobile 200 tel que décrit ci-dessus. Le procédé d'utilisation vise à donner une information visuelle sur le sens de déplacement du véhicule et le cas échéant sur la vitesse et/ou l'accélération du véhicule 200 à un ou plusieurs de ses occupants.

Plus précisément, les différentes étapes du procédé d'utilisation sont mises en oeuvre par le module de contrôle 110 de la façon suivante. Selon une première étape, le module de contrôle 110 identifie le mode de conduite du véhicule, en déterminant notamment si le véhicule est piloté par un conducteur, dans un mode de conduite manuelle, ou bien par un module de conduite autonome 226, dans un mode de conduite autonome. Pour cela, le module de contrôle peut notamment vérifier si le module de conduite autonome 226 est activé. Bien entendu, cette étape peut être facultative lorsque le véhicule n'est pas équipé d'un module de conduite autonome. Selon une deuxième étape, le module de contrôle 110 détermine au moins le sens de déplacement du véhicule. Il peut pour cela interroger l'ordinateur de bord 224 du véhicule 200 ou bien se connecter à un dispositif apte à lui communiquer ces informations. Dans cette deuxième étape, le module de contrôle peut également récupérer des informations sur la vitesse et l'accélération instantanée du véhicule au cours de son déplacement. Selon une troisième étape, le module de contrôle identifie, en fonction des données et valeurs précédemment déterminées, des paramètres de fonctionnement du système d'éclairage 120 préenregistrés et stockés dans son unité de mémorisation 116, les paramètres de fonctionnement comprenant aussi bien des informations sur le type de faisceau lumineux à émettre qu'une identification d'une ou plusieurs zones de l'habitacle à éclairer par le système d'éclairage 120. Les paramètres de fonctionnement sont ensuite transmis au système d'éclairage 120 de manière à activer un ou plusieurs ensembles lumineux 126 présents dans la ou les zones sélectionnées.

Les paramètres de fonctionnement du système d'éclairage 120 sont choisis de manière à ce qu'au moins un ensemble lumineux 126 émet un signal lumineux dynamique dans l'habitacle 210 qui se déplace selon une direction parallèle ou sensiblement parallèle au déplacement du véhicule et selon le sens inverse. En cas de déplacement en marche avant du véhicule, le signal lumineux dynamique se déplace d'avant en arrière, tandis qu'en cas de déplacement en marche arrière du véhicule, le signal lumineux dynamique se déplace d'arrière en avant.

Le signal lumineux vise ainsi à simuler le défilement du paysage et donner une illusion de vitesse aux occupants du véhicule. De préférence, le signal lumineux se déplace à une vitesse proportionnelle à celle du véhicule et il est reproduit périodiquement, afin de donner en temps réel une information sur la vitesse du véhicule. La fréquence du signal lumineux peut être adaptée en fonction de chaque ensemble lumineux, de sorte qu'un passager puisse voir en même temps un ou plusieurs signaux lumineux émis par un même ensemble lumineux. A titre d'exemple, la fréquence du signal lumineux peut augmenter en fonction de la vitesse du véhicule, afin de donner l'illusion d'un paysage plus dense. Selon un autre exemple, la couleur du signal lumineux peut également varier en fonction de la vitesse. Elle peut varier d'une couleur douce à une couleur vive selon la vitesse du véhicule. Par exemple, le signal lumineux peut être de couleur verte lorsque le véhicule respecte les limitations de vitesse, orange lorsqu'il s'approche de la vitesse limite et rouge lorsqu'il la dépasse. La couleur du signal lumineux peut également être choisie pour signaler un évènement à venir, comme par exemple des travaux sur la route, une densification du trafic, un accident, des modifications des conditions atmosphériques (averse, grêle, neige, brouillard) ou autres. Il peut ainsi être associé des codes couleurs au signal lumineux en fonction des situations énumérées ci-dessus. Selon un autre exemple, le motif du signal lumineux peut également varier en fonction desdites situations.

Tel que précisé précédemment, la zone de l'habitacle à éclairer par le système d'éclairage 120 est déterminée par le module de contrôle 110.

Le module de contrôle 110 peut activer un ou plusieurs ensembles lumineux 126 agencés à l'arrière de l'habitacle 210 de sorte à permettre à un passager assis à l'arrière d'avoir une information visuelle sur la vitesse du véhicule.

Il est possible de conditionner cette activation à une identification par les moyens de détection 140 de la présence d'au moins un passager derrière le conducteur. Ceci permet notamment de gérer ne économie d'énergie, en n'allumant pas des sources lumineuses que le conducteur ne pourrait voir du fait de son attention portée sur la route, ou tout au moins de sa position tournée vers l'avant du véhicule dans un mode de conduite autonome.

Il est également possible de contenir l'activation d'ensemble lumineux à cette zone à l'arrière de l'habitacle, afin de donner une information aux passagers assis à l'arrière du véhicule sur le sens de déplacement et sa vitesse et/ou son accélération, et notamment pour leur éviter l'apparition d'un mal du transport, tout en évitant de produire un signal lumineux sur l'avant de l'habitacle, visible par le conducteur et potentiellement gênant pour son action de conduite.

Selon un autre exemple, la zone sur laquelle les ensembles lumineux sont à allumer peut dépendre d'une détection d'un mode de conduite par le module de contrôle 110.

Lorsque ce dernier détermine que le véhicule est piloté par un module de conduite autonome 226, il peut être commandé une activation de chacune des diodes des différents ensembles lumineux pour réaliser un éclairage d'avant en arrière dans le cas d'une marche en avant du véhicule, c'est-à-dire un éclairage dynamique selon l'invention dans le sens inverse du déplacement du véhicule, sur toute la longueur de l'habitacle.

Le module de contrôle 110 peut exécuter une étape supplémentaire consistant à identifier la position du conducteur dans l'habitacle 210, avant d'identifier les zones devant être éclairées par le système d'éclairage 120. Pour cela, le module de contrôle 110 peut être connecté à des moyens de détection 140 tels que décrits ci-dessus. En fonction de la position du conducteur, le module de contrôle 110 peut activer uniquement le ou les ensembles lumineux se situant devant le conducteur afin de minimiser la consommation électrique du dispositif d'éclairage 100. Ainsi, le conducteur peut percevoir les signaux lumineux émis par au moins un ensemble lumineux 126, quel que soit sa position dans le véhicule. Par conséquent, même lorsque le conducteur ne fait pas attention à la route, il peut contrôler la vitesse du véhicule par l'intermédiaire des signaux lumineux émis par un ou plusieurs ensembles lumineux 126. Les signaux lumineux peuvent également aider le conducteur à lutter contre un possible mal des transports lorsqu'il n'est pas aux commandes du véhicule.

Le module de contrôle 110 peut également sélectionner différents ensembles lumineux selon les souhaits des occupants de l'habitacle. Par exemple, le module de contrôle peut activer le premier groupe de diodes électroluminescentes 233 et/ou le deuxième groupe 238 présents dans les portières 230 représentés aux figures 5 et 6, afin de varier l'intensité du signal lumineux perçue par les occupants du véhicule. Comme cela a pu être décrit précédemment, on pourra ainsi déclencher un éclairage direct via le premier groupe de diodes ou un éclairage indirect via le deuxième groupe de diodes en fonction des informations à faire passer en plus de l'information de déplacement du véhicule, et notamment la vitesse, l'accélération, le dépassement de certains seuils préenregistrés, comme une limitation de vitesse ou une consommation maximale de carburant.

Le module de contrôle 110 peut modifier l'intensité d'un signal lumineux émis par un ou plusieurs ensembles lumineux en fonction de la luminosité ambiante, afin que celui-ci soit plus ou moins perceptible par les occupants du véhicule. Notamment, le module de contrôle pourra piloter en intensité différemment des diodes électroluminescentes, et par exemple, en faisant décroître l'intensité d'un signal lumineux lorsque la luminosité diminue de sorte que la perception du signal lumineux soit sensiblement là même, de jour comme de nuit, ou bien il pourra déterminer l'allumage de tel ou tel groupe de diodes pour réaliser un éclairage direct, plus visible, ou un éclairage indirect.

En conclusion, l'invention propose un dispositif d'éclairage à effets lumineux dynamiques permettant aux occupants d'un véhicule de prendre connaissance rapidement et facilement de la vitesse de déplacement du véhicule. L'invention vise ainsi à faciliter le voyage des personnes sensibles au mal du transport, en leur permettant d'avoir une information visuelle cohérente avec la sensation de déplacement perçue par leur oreille internes. Selon un autre avantage de l'invention, le dispositif d'éclairage permet au conducteur de contrôler la vitesse du véhicule lorsqu'il fonctionne en mode de conduite autonome, sans qu'il lui soit pour cela nécessaire de fixer son attention au niveau du poste de pilotage.

## Revendications

1. Dispositif d'éclairage (100) à effets lumineux dynamiques pour un habitacle (210) de véhicule automobile (200), le dispositif d'éclairage (100) comprenant un système d'éclairage (120) configuré pour émettre au moins un signal lumineux produisant un effet dynamique de défilement dans l'habitacle (210) suivant l'axe longitudinal du véhicule et dans le sens inverse du déplacement du véhicule, **caractérisé en ce que** le dispositif est configuré pour identifier le mode de conduite du véhicule ; déterminer la vitesse de déplacement du véhicule ; choisir des paramètres de fonctionnement du système d'éclairage (120) en fonction de la vitesse de déplacement du véhicule ; activer le système d'éclairage (120) en fonction desdits paramètres, le choix des paramètres de fonctionnement comprenant l'identification d'une ou plusieurs zones de l'habitacle (210) à éclairer par le système d'éclairage (120), le choix de la ou des zones de l'habitacle (210) à éclairer dépendant du mode de conduite du véhicule..

2. Dispositif d'éclairage (100) selon la revendication précédente, **caractérisé en ce que** le système d'éclairage (120) est configuré pour qu'au moins un signal lumineux défile dans une partie arrière de l'habitacle (210).

3. Dispositif d'éclairage (100) selon la revendication 1 ou 2, **caractérisé en ce que** le système d'éclairage (120) est configuré pour qu'au moins un signal lumineux défile dans une partie avant de l'habitacle (210).

4. Dispositif d'éclairage (100) selon l'une des revendications précédentes, **caractérisé en ce qu'**il comprend un module de contrôle (110) configuré pour recevoir une information provenant d'un module de conduite autonome (226) du véhicule (200), de sorte qu'en fonction de cette information le module de contrôle (110) configure le système d'éclairage (120).

5. Dispositif d'éclairage (100) selon la revendication précédente, **caractérisé en ce que** le module de contrôle (110) est configuré pour recevoir une information en provenance de moyens de détection (140), relative à la présence d'un occupant dans l'habitacle et pour traiter cette information pour piloter le système d'éclairage (120).

6. Dispositif d'éclairage (100) selon l'une des revendications précédentes, **caractérisé en ce que** le système d'éclairage (120) est configuré pour qu'au moins un signal lumineux défile à une vitesse proportionnelle à la vitesse de déplacement du véhicule.

7. Dispositif d'éclairage (100) selon la revendication 6, **caractérisé en ce que** le système d'éclairage (120) est configuré pour qu'au moins un signal lumineux défile à la vitesse de déplacement du véhicule.

8. Dispositif d'éclairage (100) selon l'une des revendications précédentes, **caractérisé en ce que** le système d'éclairage (120) est configuré pour émettre simultanément au moins deux signaux lumineux distincts dans l'habitacle (210).

9. Dispositif d'éclairage (100) selon l'une des revendications précédentes, **caractérisé en ce que** le système d'éclairage (120) comprend au moins un bandeau lumineux comportant plusieurs sources de lumière (127) s'allumant l'une après l'autre de manière à faire défiler au moins un signal lumineux.

10. Véhicule automobile (200) comprenant un dispositif d'éclairage (100) selon l'une des revendications précédentes.

11. Procédé d'éclairage d'un véhicule automobile (200) selon la revendication précédente, le module de contrôle (110) étant configuré pour mettre en oeuvre les étapes suivantes :
- identification du mode de conduite du véhicule ;
- détermination de la vitesse de déplacement du véhicule ;
- choix des paramètres de fonctionnement du système d'éclairage (120) en fonction de la vitesse de déplacement du véhicule ;
- activation du système d'éclairage (120) en fonction desdits paramètres ;
**caractérisé en ce que** le choix des paramètres de fonctionnement comprend l'identification d'une ou plusieurs zones de l'habitacle (210) à éclairer par le système d'éclairage (120) et **en ce que** le choix de la ou les zones de l'habitacle (210) à éclairer dépend du mode de conduite du véhicule.

12. Procédé d'éclairage selon la revendication précédente, **caractérisé en ce que** le module de contrôle (110) définit la partie arrière de l'habitacle comme zone susceptible d'être éclairée par le système d'éclairage, lorsque le module de contrôle (110) identifie un mode de conduite autonome du véhicule.

13. Procédé d'éclairage selon la revendication 12 **caractérisé en ce que** le module de contrôle (110) définit la partie arrière et/ou la partie avant de l'habitacle comme zone susceptible d'être éclairée par le système d'éclairage, lorsque le module de contrôle (110) identifie un mode de conduite manuel du véhicule.

14. Procédé d'éclairage selon l'une des revendications 11 à 13, **caractérisé en ce que** le choix des paramètres de fonctionnement comprend la vitesse et/ou l'accélération du défilement du signal lumineux dans l'habitacle (210).

## Patentansprüche

1. Beleuchtungsvorrichtung (100) mit dynamischen Lichteffekten für einen Innenraum (210) eines Kraftfahrzeugs (200), wobei die Beleuchtungsvorrichtung (100) ein Beleuchtungssystem (120) enthält, das konfiguriert ist, mindestens ein Lichtsignal zu emittieren, das einen dynamischen Durchlaufeffekt im Fahrzeuginnenraum (210) gemäß der Längsachse des Fahrzeugs und in Gegenrichtung zur Fahrt des Fahrzeugs produziert, **dadurch gekennzeichnet, dass** die Vorrichtung konfiguriert ist, den Fahrmodus des Fahrzeugs zu erkennen; die Fahrgeschwindigkeit des Fahrzeugs zu bestimmen; Betriebsparameter des Beleuchtungssystems (120) abhängig von der Fahrgeschwindigkeit des Fahrzeugs zu wählen; das Beleuchtungssystem (120) abhängig von den Parametern zu aktivieren, wobei die Wahl der Betriebsparameter die Erkennung eines oder mehrerer vom Beleuchtungssystem (120) zu beleuchtenden Bereiche des Fahrzeuginnenraums (210) enthält, wobei die Wahl des oder der zu beleuchtenden Bereiche des Fahrzeuginnenraums (210) vom Fahrmodus des Fahrzeugs abhängt.

2. Beleuchtungsvorrichtung (100) nach dem vorhergehenden Anspruch, **dadurch gekennzeichnet, dass** das Beleuchtungssystem (120) konfiguriert ist, damit mindestens ein Lichtsignal in einem hinteren Teil des Fahrzeuginnenraums (210) durchläuft.

3. Beleuchtungsvorrichtung (100) nach Anspruch 1 oder 2, **dadurch gekennzeichnet, dass** das Beleuchtungssystem (120) konfiguriert ist, damit mindestens ein Lichtsignal in einem vorderen Teils des Fahrzeuginnenraums (210) durchläuft.

4. Beleuchtungsvorrichtung (100) nach einem der vorhergehenden Ansprüche, **dadurch gekennzeichnet, dass** sie ein Kontrollmodul (110) enthält, das konfiguriert ist, eine von einem autonomen Fahrmodul (226) des Fahrzeugs (200) kommende Information zu empfangen, so dass das Kontrollmodul (110) das Beleuchtungssystem (120) abhängig von dieser Information konfiguriert.

5. Beleuchtungsvorrichtung (100) nach dem vorhergehenden Anspruch, **dadurch gekennzeichnet, dass** das Kontrollmodul (110) konfiguriert ist, eine von Erfassungseinrichtungen (140) kommende Information bezüglich der Anwesenheit eines Insassen im Fahrzeuginnenraum zu empfangen und diese Information zu verarbeiten, um das Beleuchtungssystem (120) zu steuern.

6. Beleuchtungsvorrichtung (100) nach einem der vorhergehenden Ansprüche, **dadurch gekennzeichnet, dass** das Beleuchtungssystem (120) konfiguriert ist, damit mindestens ein Lichtsignal mit einer Geschwindigkeit proportional zur Fahrgeschwindigkeit des Fahrzeugs durchläuft.

7. Beleuchtungsvorrichtung (100) nach Anspruch 6, **dadurch gekennzeichnet, dass** das Beleuchtungssystem (120) konfiguriert ist, damit mindestens ein Lichtsignal mit der Fahrgeschwindigkeit des Fahrzeugs durchläuft.

8. Beleuchtungsvorrichtung (100) nach einem der vorhergehenden Ansprüche, **dadurch gekennzeichnet, dass** das Beleuchtungssystem (120) konfiguriert ist, gleichzeitig mindestens zwei unterschiedliche Lichtsignale in den Fahrzeuginnenraum (210) zu emittieren.

9. Beleuchtungsvorrichtung (100) nach einem der vorhergehenden Ansprüche, **dadurch gekennzeichnet, dass** das Beleuchtungssystem (120) mindestens ein Lichtband enthält, das mehrere Lichtquellen (127) aufweist, die nacheinander aufleuchten, um mindestens ein Lichtsignal durchlaufen zu lassen.

10. Kraftfahrzeug (200), das eine Beleuchtungsvorrichtung (100) nach einem der vorhergehenden Ansprüche enthält.

11. Beleuchtungsverfahren eines Kraftfahrzeugs (200) nach dem vorhergehenden Anspruch, wobei das Kontrollmodul (110) konfiguriert ist, die folgenden Schritte durchzuführen:
- Erkennung des Fahrmodus des Fahrzeugs;
- Bestimmung der Fahrgeschwindigkeit des Fahrzeugs;
- Wahl der Betriebsparameter des Beleuchtungssystems (120) abhängig von der Fahrgeschwindigkeit des Fahrzeugs;
- Aktivierung des Beleuchtungssystems (120) abhängig von den Parametern;
**dadurch gekennzeichnet, dass** die Wahl der Betriebsparameter die Erkennung eines oder mehrerer vom Beleuchtungssystem (120) zu beleuchtender Bereiche des Fahrzeuginnenraums (210) enthält, und dass die Wahl des oder der zu beleuchtenden Bereiche des Fahrzeuginnenraums (210) vom Fahrmodus des Fahrzeugs abhängt.

12. Beleuchtungsverfahren nach dem vorhergehenden Anspruch, **dadurch gekennzeichnet, dass** das Kontrollmodul (110) den hinteren Teil des Fahrzeuginnenraums als einen Bereich definiert, der geeignet ist, vom Beleuchtungssystem beleuchtet zu werden, wenn das Kontrollmodul (110) einen autonomen Fahrmodus des Fahrzeugs erkennt.

13. Beleuchtungsverfahren nach Anspruch 12, **dadurch gekennzeichnet, dass** das Kontrollmodul (110) den hinteren Teil und/oder den vorderen Teil des Fahrzeuginnenraums als einen Bereich definiert, der geeignet ist, vom Beleuchtungssystem beleuchtet zu werden, wenn das Kontrollmodul (110) einen manuellen Fahrmodus des Fahrzeugs erkennt.

14. Beleuchtungsverfahren nach einem der Ansprüche 11 bis 13, **dadurch gekennzeichnet, dass** die Wahl der Betriebsparameter die Geschwindigkeit und/oder die Beschleunigung des Durchlaufs des Lichtsignals im Fahrzeuginnenraum (210) enthält.

## Claims

1. Lighting device (100) with dynamic light effects for a passenger compartment (210) of a motor vehicle (200), the lighting device (100) comprising a lighting system (120) configured to emit at least one light signal producing a dynamic effect of scrolling in the passenger compartment (210) along the longitudinal axis of the vehicle and in the opposite direction to the direction of travel of the vehicle, **characterized in that** the device is configured to: identify the driving mode of the vehicle; determine the speed of travel of the vehicle; choose operating parameters of the lighting system (120) in accordance with the speed of travel of the vehicle; activate the lighting system (120) in accordance with said parameters, choosing the operating parameters comprising identifying one or more zones of the passenger compartment (210) to be lit by the lighting system (120), the choice of the one or more zones of the passenger compartment (210) to be lit depending on the driving mode of the vehicle.

2. Lighting device (100) according to the preceding claim, **characterized in that** the lighting system (120) is configured so that at least one light signal scrolls in a rear part of the passenger compartment (210).

3. Lighting device (100) according to Claim 1 or 2, **characterized in that** the lighting system (120) is configured so that at least one light signal scrolls in a front part of the passenger compartment (210).

4. Lighting device (100) according to one of the preceding claims, **characterized in that** it comprises a control module (110) configured to receive information originating from an autonomous driving module (226) of the vehicle (200), such that the control module (110) configures the lighting system (120) in accordance with this information.

5. Lighting device (100) according to the preceding claim, **characterized in that** the control module (110) is configured to receive information, originating from detection means (140), concerning the presence of an occupant in the passenger compartment and to process this information in order to control the lighting system (120) .

6. Lighting device (100) according to one of the preceding claims, **characterized in that** the lighting system (120) is configured so that at least one light signal scrolls at a speed proportional to the speed of travel of the vehicle.

7. Lighting device (100) according to Claim 6, **characterized in that** the lighting system (120) is configured so that at least one light signal scrolls at the speed of travel of the vehicle.

8. Lighting device (100) according to one of the preceding claims, **characterized in that** the lighting system (120) is configured to emit simultaneously at least two distinct light signals in the passenger compartment (210).

9. Lighting device (100) according to one of the preceding claims, **characterized in that** the lighting system (120) comprises at least one light strip including a plurality of light sources (127) illuminating one after the other in such a way as to cause at least one light signal to scroll.

10. Motor vehicle (200) comprising a lighting device (100) according to one of the preceding claims.

11. Method for lighting a motor vehicle (200) according to the preceding claim, the control module (110) being configured to implement the following steps:
- identifying the driving mode of the vehicle;
- determining the speed of travel of the vehicle;
- choosing the operating parameters of the lighting system (120) in accordance with the speed of travel of the vehicle;
- activating the lighting system (120) in accordance with said parameters,
**characterized in that** choosing the operating parameters comprises identifying one or more zones of the passenger compartment (210) to be lit by the lighting system (120) and **in that** the choice of the one or more zones of the passenger compartment (210) to be lit depends on the driving mode of the vehicle.

12. Lighting method according to the preceding claim, **characterized in that** the control module (110) defines the rear part of the passenger compartment as a zone which may be lit by the lighting system, when the control module (110) identifies an autonomous driving mode of the vehicle.

13. Lighting method according to Claim 12, **characterized in that** the control module (110) defines the rear part and/or the front part of the passenger compartment as a zone which may be lit by the lighting system, when the control module (110) identifies a manual driving mode of the vehicle.

14. Lighting method according to one of Claims 11 to 13, **characterized in that** choosing the operating parameters comprises the speed and/or the acceleration of the scrolling of the light signal in the passenger compartment (210).
